# EUROPEAN PATENT APPLICATION

(11) **EP 2 236 342 A1**
(43) Date of publication of application: **06.10.2010**
(21) Application number: 10380046.2
(22) Date of filing: 30.03.2010
(51) Int. Cl.: B60K 37/00, B60H 1/00, B60H 1/34, B60R 11/00, B60R 11/02

(54) **Motor vehicle dashboard**

(30) Priority: 03.04.2009 ES 200900674 U
(71) Applicant: Seat, S.A., 08760 Martorell (ES)
(72) Inventor: Pérez Pérez, Fernando, 08760- Martorell-Barcelona (ES); Martos Ortega, Antonio, 08760- Martorell-Barcelona (ES); Caraballo Garcia, Enric, 08760- Martorell-Barcelona (ES)
(74) Representative: Carvajal y Urquijo, Isabel

(57) **Abstract**

Motor vehicle dashboard, constituted by a board in which there are mounted different accessories or instruments, wherein said dashboard comprises, in its upper part, at least one recessed area (4) with respect to the adjacent surface, configuring a tray, the area of which can be detached to delimit an opening through which there is access to the internal structure and on the contour of which a component or element is mounted which belongs to one of the aforementioned accessories or instruments. The recessed area is surrounded by a perimeter molding (9) limiting the contour of the detachable area of said recessed area, on the molding of which the contour of the accessory or instrument which is mounted in the opening is coupled and rests.

## Description

### Field of the invention

The present invention refers to a dashboard for motor vehicles, constituted by a molded board in which different accessories and/or instruments are mounted and which constitutes one of the most attractive components or areas of the vehicle interior.

### Background of the invention

Motor vehicle dashboards are normally constituted by a board which is obtained from plastic materials, through injection molding. This board can be externally covered by a film or skin, generally from PVC, to obtain the visible surface. The board is completed by a rear frame and a resistant structure.

With this constitution or other similar ones, the dashboard usually has different instruments or accessories mounted thereon, such as air diffusers, glove compartment, instrument panel, etc., all these elements are usually mounted on the front part of the vehicle. The upper part of the dashboard is generally almost entirely free, although in certain cases it can have openings for loudspeakers, which are not always occupied by them, and it can even have a central structure which serves as a tray for the placement of small objects.

All the aforementioned requires a dashboard with a custom design for each vehicle model, being also possible that within the same model, as there exist different ranges, each one of them requires a different dashboard, simply because they include different accessories which could occupy the same areas in the different ranges. That is, in spite of the fact that the differences between dashboards are minimal, different dashboards will be necessary, obtained through different molds and operations, all of which entails an increase of costs.

### Description of the invention

The object of the present invention is to solve the aforementioned problem, through a dashboard the board of which is configured so that it can be applied to fulfill different functions, that is, enabling the mounting of different accessories, and all that through the design of a dashboard configuration which enables, without duplication of molds, to minimize product costs, being possible to apply the same board to at least two versions of a particular vehicle model, for example for a basic version and for an higher range version.

According to the present invention, the dashboard comprises in its upper part at least one recessed area with respect to the adjacent surface and which is designed to fulfill tray functions, for the placement of small objects. This area, or at least its bottom, is detachable to delimit an opening through which access is provided to the inner structure, and on the contour of which a component or element is mounted belonging to one of the accessories or instruments which will be arranged on the dashboard.

With this constitution it is possible to arrange two dashboards with different elements, both constituted from the same dashboard configuration, thus enabling to have two different dashboards, without duplication of molds, minimizing product costs. Likewise, one dashboard will be obtained for two different dashboard versions and vehicles. For example, one dashboard can be for a basic version, in which said dashboard will have in its upper part a recessed area, designed as a tray, where the film or skin covering the dashboard can have a different surface finish in the area covering the tray, offering for example a rough configuration simulating a pad.

The same dashboard board described above enables to obtain a different version of the dashboard, for example, for an higher-range vehicle. To that end, the bottom of the recessed area will be detached, for example through die-cutting, obtaining an opening in which another element can be housed, such as a loudspeaker.

With the constitution described, there is only one board for two dashboard versions and different vehicles.

Likewise, the board could be molded with other different molds which also enable a double application, thus having a dashboard for motor vehicles with at least two different applications, without needing to perform different moldings.

Preferably, the aforementioned recess on the upper part of the board will be surrounded by a perimeter molding limiting the contour of the detachable area of said recess. The contour of the accessory or instrument which is mounted in the opening will be coupled and rest on this molding.

A support of the accessory to be mounted can be coupled on the aforementioned perimeter molding, the support of which is fixed to the internal structure of the board and has openings through which clip or anchoring pins are inserted, which belong to said accessory.

When cutting the bottom of the recessed area, for mounting a particular accessory, the opening obtained gives access to the inner structure of the dashboard, allowing the fixing of the accessory which is to be mounted on the opening.

### Brief description of the drawings

In the attached drawings, there is shown a possible embodiment of a dashboard for motor vehicles constituted according to the invention, provided as a non-limiting example thereof, where:
Figure 1 is an upper view of a dashboard for motor vehicles, constituted according to the invention.
Figure 2 is a longitudinal sectional partial view of a dashboard, obtained according to the cutting line II-II of figure 1.
Figure 3 is a similar section to figure 2, with the bottom of the recessed area being cut off.
Figure 4 corresponds to the detail A of figure 3, at a larger scale, showing a possible form of fixing the accessory on the opening drilled on the dashboard.

### Detailed description of an embodiment

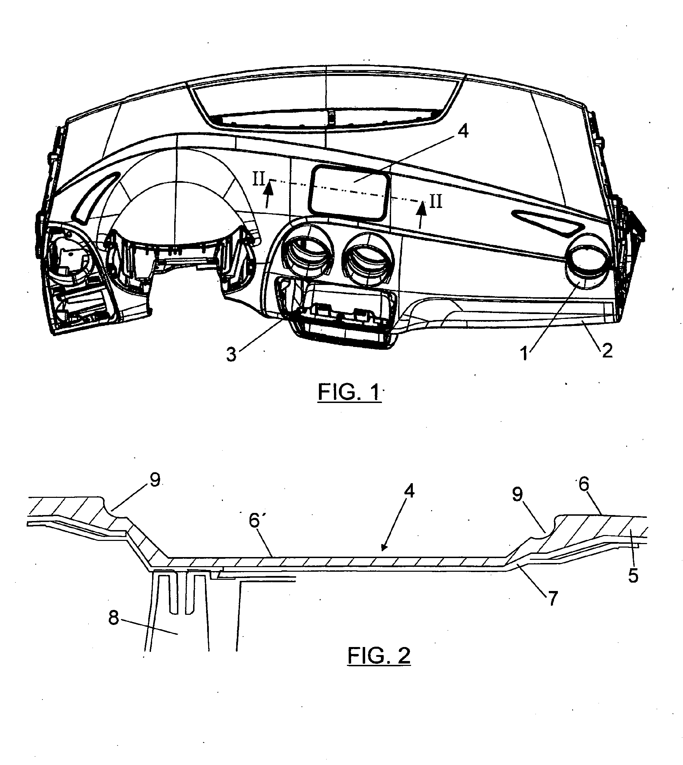

Figure 1 shows a plan view of a dashboard for motor vehicles with a traditional constitution, which has different accessories mounted thereon, such as openings or ventilation grids 1, a glove compartment 2, instrument board 3, etc.

In the upper part of this dashboard there also exits a slightly recessed area 4 with respect to the adjacent surface, which is conceived to comply with tray functions, to arrange small objects.

As it can be seen better in figure 2, the dashboard comprises a board 5, obtained through injection molding, the external surface of which is covered by a skin 6, for example of P.V.C., which will define the finish or visible surface of the dashboard. Interiorly the board 5 includes a frame 7 and a structural part 8 which will serve as support or connecting element to the vehicle structure.

Figure 2 shows the recessed area 4, which is surrounded by a perimeter molding limiting the contour of the recessed area 4.

With the constitution and configuration described, the dashboard offers in its upper part a recessed area 4 which is used as a tray.

The bottom of this recessed area 4 of the dashboard can be detached, for example through die-cutting, obtaining an opening 10, the contour of which will serve for the mounting of an accessory, such as for example the grid 11 of a loudspeaker.

The perimeter molding 9 can define the contour or limit of the opening 10. This perimeter molding 9 will also serve for support of the contour of the grid 11 or accessory which is mounted in the opening 10.

Through the opening 10 made on the bottom of the recessed area 4 there is access to the structural part 8, on which the accessory or instrument mounted on the opening 10 can rest and be fixed.

The grid 11 or accessory mounted on the opening 10 will be fixed on a support 12 of the accessory which can rest and be fixed in the inner structural part 5 of the dashboard, this support part 12 also resting on the perimeter molding 9.

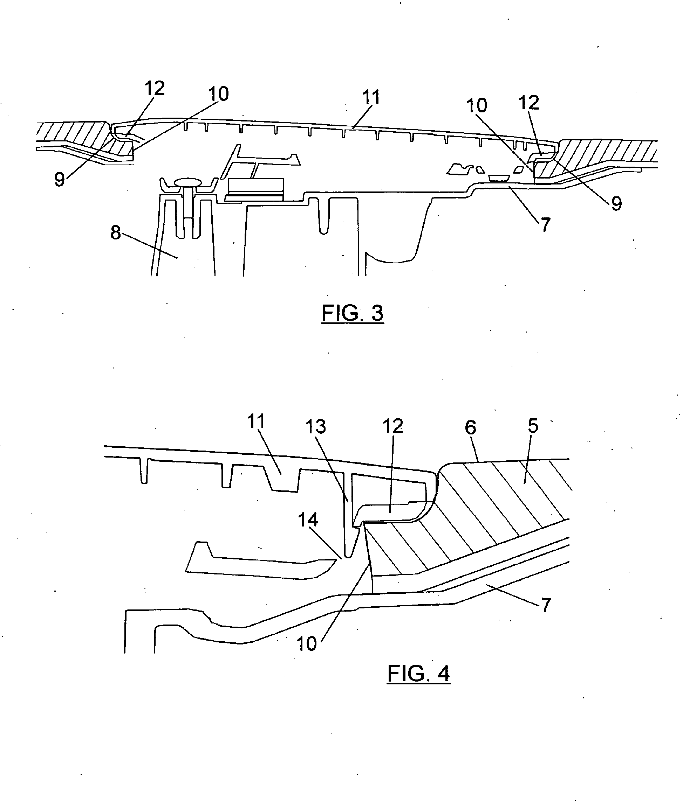

The fixing of the grid 11 or accessory on the support 12 can be carried out, as shown in figure 4, through clip pins 13 which downwardly protrude from the grid 11 and which are inserted through openings 14 of the support 12 of said grid.

The film 6, figure 2, covering the board 5 can adopt, in the section 6' coinciding with the recessed area 4, a different external aspect, for example with certain roughness, simulating a pad.

With the constitution described, one dashboard, in which the board 5 is obtained through a single injection process, can fulfill a double function: on the one hand it can offer an area 4 with tray functions and, on the other, it can have an opening 10, for the mounting of a particular accessory or implement.

It can be understood that like the double function described above, the dashboard could have other areas with a similar configuration, thought also for fulfilling a double function.

The fixing of the accessory mounted in the opening 10 can be carried out on the structural part 8 through screw driving or any other system.

## Claims

1. Motor vehicle dashboard, constituted by a board in which there are mounted different accessories or instruments, **characterized in that** it comprises in its upper part at least one recessed area with respect to the adjacent surface, configuring a tray, the area of which can be detached to delimit an opening through which there is access to the internal structure, and on the contour of which a component or element is mounted which belongs to one of the aforementioned accessories or instruments.

2. Dashboard according to claim 1, **characterized in that** the aforementioned recessed area is surrounded by a perimeter molding limiting the contour of the detachable area of said recessed area, on the molding of which the contour of the accessory or instrument which is mounted in the opening is coupled and rests.

3. Dashboard according to claim 1, comprised by a board the surface of which is covered by a flexible film or skin, **characterized in that** the aforementioned film or skin has, on the section covering the aforementioned recessed area, a rough surface simulating a pad.

4. Dashboard according to claim 1, **characterized in that**, on the perimeter molding, a support of the accessory or instrument to be mounted is coupled, the support of which is fixed to the inner structure of the board and has openings through which there are inserted anchoring pins which belong to said accessory.
